Europäisches Patentamt

European Patent Office

Office européen des brevets

(11) Publication number: **0 125 877 B1**

# EUROPEAN PATENT SPECIFICATION

(45) Date of publication of patent specification: **31.07.91** (51) Int. Cl.⁵: **H04N 1/32**

(21) Application number: **84303123.8**

(22) Date of filing: **09.05.84**

(54) Information input apparatus.

(30) Priority: **09.05.83 JP 82286/83**

(43) Date of publication of application:
**21.11.84 Bulletin 84/47**

(45) Publication of the grant of the patent:
**31.07.91 Bulletin 91/31**

(84) Designated Contracting States:
**DE FR GB**

(56) References cited:
**JP-A-58 062 968**
**US-A- 4 086 443**

**PATENTS ABSTRACTS OF JAPAN, vol. 5, no.
153 (E-76)[825], 26th September 1981; & JP -
A - 56 84 072**

**IBM TECHNICAL DISCLOSURE BULLETIN, vol.
24, no. 9, February 1982, pages 4625,4626,
IBM Corp., New York, US; J.M. NAGDA et al.:
"Control sheet with row count verification"**

(73) Proprietor: **SHARP KABUSHIKI KAISHA
22-22 Nagaike-cho Abeno-ku
Osaka 545(JP)**

(72) Inventor: **Kamada, Hiroshi
7-818 2-2, Nogaito-cho
Yamatokoriyama-shi Nara-ken(JP)**
Inventor: **Kita, Sumio
488 Kodono-cho
Nara-shi Nara-ken(JP)**

(74) Representative: **Wright, Peter David John et al
R.G.C. Jenkins & Co. 26 Caxton Street
London SW1H 0RJ(GB)**

## Description

The present invention relates to an information input apparatus, and more particularly, to an improved information input apparatus including a circuit for discriminating between different types of sheet inputted and reading the sheet information accordingly.

In a conventional document information input apparatus, an image such as the characters or figures on a document sheet is scanned by an optical scanner, and a digitised image produced by scanning is inputted into and read by a central processing unit of a computer or similar device.

Such conventional document information input apparatus is suitable for inputting an image from the document sheet. However, for use in an electronic file system, when a key word or a title relating to the inputted information is required for retrieval of the images, this has to be inputted by manual operation on each document sheet or once for each predetermined number of document sheets which results in the document information input time being extended when the images of a number of document sheets are to be inputted. It also requires an additional input device which can be used to input the specific information such as the title or the key word.

An example of a prior art device is described in US-A-4,086,443 which relates to an automatic telephone dialler for use with a facsimile machine. A raster input scanner detects a unique sequence of black and white picture elements to identify an address card from a stack of document sheets. Instructions are decoded on the basis of the amount of time which passes during scanning of each row of elements.

Another example of a prior art device is described in JP-A-58,062,968. This relates to an optical character reader and facsimile combined. A file recognition procedure operates to identify a hand-written ID code located at a common position on each document. The character/image information on the document is then processed in a manner dependent upon the identified format of the document.

According to the invention there is provided an apparatus for reading sheets and for discriminating between different types of sheet, comprising:

reading means for reading a sheet carrying image information to provide image data representing said image information;

memory means for storing the image data representing said image information;

coding means for binary-coding the image data representing said image information;

calculation means operable on the binary-coded data for identifying the nature of the information on the sheet and thereby the type of said sheet, and

image processing means for processing the image information in a manner dependent upon the identified type of the sheet;

characterised in that said calculation means is operable to recognise the presence in said image information on the sheet which has been read of an array of marks of predetermined size and spacing, said calculation means being adapted to process said binary-coded data so as to detect a succession of black/white transitions spaced apart in a predetermined direction on the sheet, to calculate the positions of said transitions in said direction and determine whether said calculated positions are indicative of a pattern of marks having said predetermined size and spacing.

Other aspects and further scope of applicability of the present invention will become apparent from the detailed description given hereinafter. It should be understood, however, that the detailed description of and specific examples, while indicating preferred embodiments of the invention are given by way of illustration only, since various changes and modifications within the scope of the invention will become apparent to those skilled in the art from this detailed description.

In order that the present invention may be better understood a detailed description of an embodiment thereof will be given, by way of example, with reference to the accompanying drawings, wherein:

Figure 1 shows a block diagram of a sheet information input apparatus including a discriminating circuit according to the present invention;

Figure 2 shows a plan view of an OMR sheet;

Figure 3 shows a partially enlarged view of the OMR sheet of Figure 2; and

Figure 4 shows a flow chart explaining the operation of the invention.

The information sheet referred to hereinbelow can be an OMR (Optical Mark Reader) sheet, an OCR (Optical Character Reader) sheet or a document sheet containing some image or information. For ease of description the use of the invention is described mainly in relation to a document sheet and an OMR sheet. Character information recorded on an OCR sheet could be read out in known fashion by discriminating dark character portions from the white sheet background portion by the difference in light reflection detected by the reader.

A sheet information input apparatus according to an embodiment of the present invention comprises means for judging whether a document sheet, an OMR sheet, or an OCR sheet is inputted, and document input means for inputting an image from a document sheet, an optical mark reader for inputting specific information such as a key word or a title by reading specific marks from an OMR sheet, and an optical character reader for inputting information such as a key word or a title by reading characters from an OCR sheet.

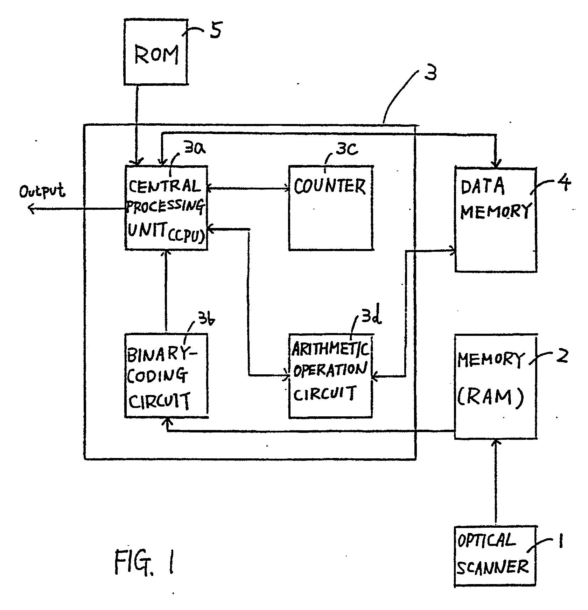

With reference to Figure 1, an optical scanner 1 comprising a CCD camera scans one page (or a portion) of a sheet. The optical scanner 1 might typically have a reading resolution of about 12 lines/mm. Information such as an image obtained by scanning the one page (or the portion) of the sheet is converted to electrical signals and is stored in a memory 2. In this embodiment of the present invention the information on the sheet is converted to electric signals having 12(row) x 12-(column) picture elements/mm$^2$. For example, if the sheet is an A4 size sheet (297mm x 210mm), 8,981,280 picture elements (297mm x 12 picture elements x 210mm and 12 picture elements) will be stored in the memory 2.

Operating on the memory contents (the information of the one page (or the piece) of the sheet) of the memory 2, a controller 3 detects whether the sheet is an OMR sheet, an OCR sheet or a document sheet, and outputs information in accordance with the type of sheet.

The controller 3 comprises a central processing unit (CPU) 3a, a binary-coding circuit 3b, a counter 3c and an arithmetic operation circuit 3d. Further the controller 3 is connected to a data memory 4 such as a random access memory (RAM). The central processing unit (CPU) 3a is connected to a read only memory (ROM) 5. Microprocessor "Z-8000" supplied by SHARP CORPORATION, Japan provides all the elements of Figure 1 except the optical scanner 1.

The binary-coding circuit 3b is operative on the contents of the memory 2 by detecting whether the level of the video signal (the electric signal) is smaller or greater than that of a constant threshold value, and the video signals (the electric signals) are thus converted to black codes "1" and white codes "0". If the sheet is A4 size, 8,981,280 picture elements will be converted to black codes "1" and white codes "0".

The CPU 3a operates to detect whether each of the picture elements of the sheet information is black or white by searching the output of the binary-coding circuit 3b for black code "1" signals and white code "0" signals.

The counter 3c is operable to measure the distance from one end of the sheet to a point at which a black code "1" changes to a white code "0", or to a point at which the white code "0" changes to the black code "1" by counting in accordance with the judging of the CPU 3a.

The data memory 4 stores each of the measurement results of the counter 3c, and the calculation results of the arithmetic operation circuit 3d, which is described below.

The ROM 5 stores values relating to the size and position of a timing mark M forming the specific code of an OMR sheet, or the size or position of a writing zone for writing characters or numerical on the OCR sheet, or the like.

The arithmetic operation unit 3d calculates values relating to the size and position of codes detected by the CPU 3a as a series of black to white or white to black changes by operating on the distances obtained by the counter 3c.

The CPU 3a outputs a sheet type judging signal by comparing the calculation results of the arithmetic operation unit 3d, or the contents of the memory 4, with the stored values in the ROM 5.

The operation for determining whether the sheet is a document or an OMR sheet will be described below.

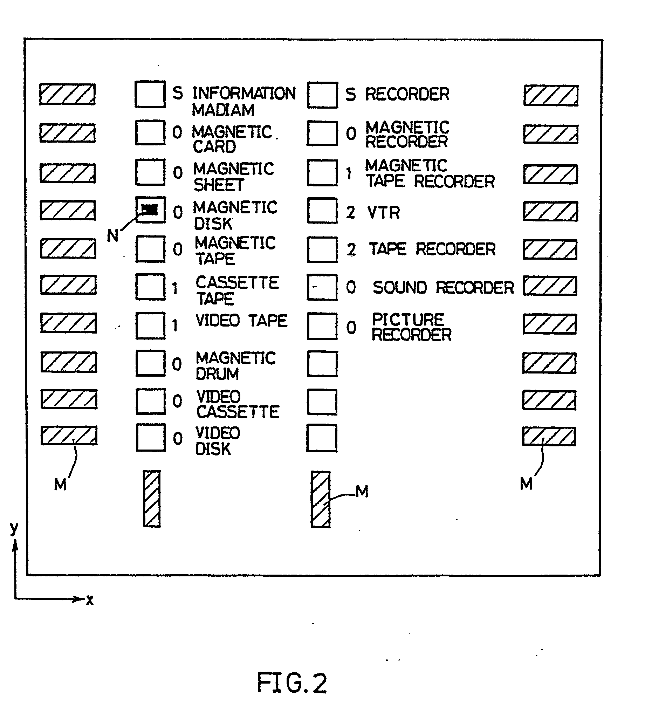

Referring to Figure 2, timing marks M on the OMR sheet show read zones in the X (row) direction and in the Y (column) direction. The timing marks M are black, and each timing mark M results in a pattern of black code "1" signals.

The document sheet will not have timing marks M showing the read zone, so that the sheet is determined to be a document sheet or an OMR sheet by judging whether a specific pattern of fixed size timing marks (black marks) are detected to be present. Accordingly, the sheet type can be judged.

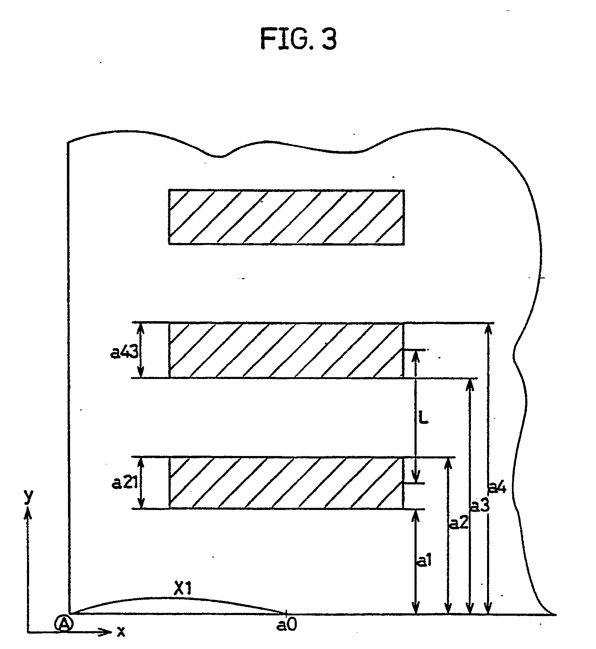

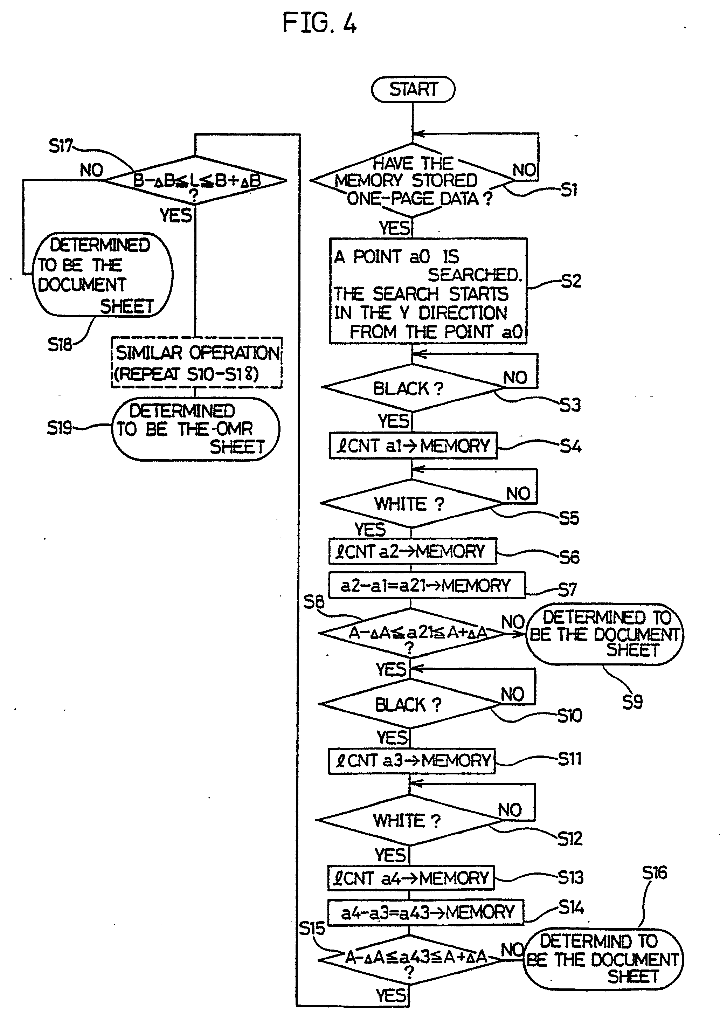

The operation of the input apparatus is explained with reference to the flow-chart of Figure 4 and the enlarged portion of an OMR sheet shown in Figure 3.

Step S1: Information (image) on one page (or the piece) of the sheet is stored in the memory 2 from the optical scanner 1.

Step S2: The search for the timing mark M starts in the Y direction from the point a0 which is at a distance X1 along the X direction from the end Ⓐ (origin) of the sheet. The distance X1 has previously been stored in the ROM 5.

Step S3: CPU 3a operates to detect whether a black code "1" corresponding to a timing mark M is present or absent on the sheet by detecting the output of the binary coding circuit 3d.

Step S4: If a black code "1" is detected, indicating that a timing mark M is present on the sheet, the distance a1 is stored in the data memory 4. The distance a1 is the distance from one edge of the sheet to the point at which the white code "0" changes to the black code "1" as counted by the counter 3c. The search for the timing marks M continues to be executed in the Y direction.

Step S5: Step S5 is executed to detect whether the white code "0" is present or absent.

Step S6: When the white code "0" is detected to be present on the sheet, the distance a2 is stored in the data memory 4. The distance a2 is the distance from the edge of the sheet to the point at which the black code "1" changes to the white code "0", as counted by the counter 3c.

Step S7: The width a21 ($=$a2 minus a1) of the first timing mark M is calculated by the arithmetic operation unit 3d, and the width a21 is stored in the data memory 4.

Step S8: The CPU 3a is operated to detect whether the width a21 of the first timing mark M occurs within a range from a predetermined width A - $\triangle$ A to another predetermined width A + $\triangle$ A. For example, A - $\triangle$ A $\leq$ a21 $\leq$ A + $\triangle$ A where a21 $=$ a2 - a1. The predetermined width A of the timing mark M and the error $\pm$ $\triangle$ A are previously stored into the ROM (Read Only Memory) 5.

Step S9: If the width a21 of the first timing mark M does not fall between the widths A $\pm$ $\triangle$ A, the sheet is judged to be a document sheet. If the width a21 of the first timing mark M does fall between the widths A $\pm$ $\triangle$ A, the next step of the operation is executed.

Each of steps S10 - S16 correspond to each of steps S3 - S9. The steps S10 - S16 are executed to detect whether a second timing mark M is present or absent on the sheet. If the second timing mark M is present, the distance a3 from one edge of the sheet to the point at which the black code "1" changes to the white code "0" is measured by the counter 3c, and the distance a4 from the edge of the sheet to the point at which the white code "0" changes back to the black code "1" is measured by the counter 3c. In the Step S15, if the width a43($=$a4 minus a3) of the second black mark M lies between the widths A $\pm$ $\triangle$ A, step is executed.

Step S17: Step S17 is executed to detect whether the interval L between the centre of the width a21 of the first timing mark M and the centre of the width a43 of the second timing mark M lies within the range between a predetermined valve B - $\triangle$ B and another predetermined valve B + $\triangle$ B. The predetermined value B between the centres of the two timing marks and the errors $\pm$ $\triangle$ B are previously stored in the ROM 5. For example, B - $\triangle$ B $\leq$ L $\leq$ B + $\triangle$ B where L$=$(a43/2 + a3)-(a21/2 + a1).

Step S18: When the interval L does not lie in the interval B $\pm$ $\triangle$ B, the sheet is judged to be a document sheet. If the interval L does fall within the intervals B $\pm$ $\triangle$ B, the next (third) timing mark M is searched for by using steps S10 - S16. In step S15 for the third timing mark M, when the width of the third timing mark M is in the range A $\pm$ $\triangle$ A, steps S17 and S18 are executed of the third timing mark M, and the interval between the centre of the width of the second timing mark M and the centre of the width of the third timing mark M is compared with the interval B $\pm$ $\triangle$ B.

The search for timing marks M is stopped at any stage when the sheet is judged to be a document sheet, otherwise it continues until it reaches the upper end of the sheet in the Y direction. The search is then executed in the X direction using the same operation. The values A, $\pm$ $\triangle$ A, B, $\pm$ $\triangle$ B can be changed if necessary, dependent on the size and positions of the timing marks M in the X direction.

In the search for timing marks M in the X direction, the search will be stopped either when the sheet is judged to be a document sheet or when the search for the timing mark M reaches the upper end of the sheet in the X direction. When the search reaches the end of the sheet in the X direction, step S19 is executed.

Step S19: After the search of the timing mark M has been completed in the X and Y directions, the sheet is judged to be an OMR sheet.

The values $\pm$ $\triangle$ A and $\pm$ $\triangle$ B can be selected dependent on the printing accuracy of the OMR sheet or the OCR sheet and the reading accuracy of the optical scanner 1.

When the sheet is judged to be an OMR sheet and the OMR sheet detecting signal is outputted from the CPU 3a, the mark position on the OMR sheet is optically read (for example, N) and the mark information is outputted and stored in a predetermined memory according to methods well known to a person of ordinary skill in the art.

If the sheet is judged to be a document sheet and the document sheet detecting signal is inputted from the CPU 3a, the image on the document sheet is read and inputted in a memory according to methods well known in the art.

In the present invention, an OCR (Optical Character Reader) sheet can be used in place of the OMR sheet. Each of an OCR sheet, an OMR sheet, and a document sheet can be discriminated from the others.

If both document sheets and the OCR sheets are use in the sheet information input apparatus, the OCR sheet is detected by judging the specific code relating to a writing zone on the OCR sheet for writing characters or numerals to be optically read. Accordingly, when the sheet is judged to be an OCR sheet and the OCR sheet detecting signal is outputted from the CPU 3a, the characters or numerals on the OCR sheet are optically read and inputted in the predetermined memory according to methods well known in the art.

According to the present invention, if a sheet supply means is installed in the optical scanner for automatically forwarding the sheets to be read, an OMR sheet or an OCR sheet can be inserted at any point between each of a plurality of document sheets, so that a key word or a title corresponding to each of the plurality of the documents can be automatically inputted from the OMR sheet or OCR sheet.

In a further preferred embodiment of the present invention, a sheet containing an OMR information zone and/or an OCR information zone, and a document image zone can be used.

After such a sheet is inputted into the memory 2 by the optical scanner 1, the controller 3 is executed to judge whether an OMR information zone and/or an OCR information zone are/is present or absent on the sheet by detecting the timing marks M of the OMR information zone or the specific code relating to the OCR information zone. The controller 3 is provided with means for detecting a sheet number recorded on the sheet and assigned to sheets of the type containing a document image zone and an OMR information zone and/or the OCR information zone. By reading the sheet number, it is detected that the sheet presently being read is of the "mixture-type" sheets. The OMR information zone and/or the OCR information zone can store a key word, or title information while the document image one can store the image pattern. These items of information can be outputted as being related to each other.

In the present invention, the coded image may be stored into the memory 2 after the image obtained by scanning is converted to black codes "1" and white codes "0". The embodiment of the present invention can be used in an electronic file system.

## Claims

1. Apparatus for reading sheets and for discriminating between different types of sheet, comprising:

   reading means (1) for reading a sheet carrying image information to provide image data representing said image information;

   memory means (2) for storing the image data representing said image information;

   coding means (3b) for binary-coding the image data representing said image information;

   calculation means (3a, 3c, 3d, 4, 5) operable on the binary-coded data for identifying the nature of the information on the sheet and thereby the type of said sheet, and

   image processing means for processing the image information in a manner dependent upon the identified type of the sheet;

   characterised in that said calculation means is operable to recognise the presence in said image information on the sheet which has been read of an array of marks (M) of predetermined size (a) and spacing (L), said calculation means being adapted to process said binary-coded data so as to detect a succession of black/white transitions spaced apart in a predetermined direction (y;x) on the sheet, to calculate the positions of said transitions in said direction (y; x), and determine whether said calculated positions are indicative of a pattern of marks having said predetermined size (a) and spacing (L).

2. Apparatus according to claim 1 characterised in that said calculation means (3a, 3c, 3d, 4, 5) is operable to detect a said succession of black/white transitions spaced apart along a detection line which extends in said direction (y) parallel to and at a predetermined distance (a0) from a first edge of said sheet for recognising the presence of a row of marks (M) of a predetermined width and spacing measured along said detection line.

3. Apparatus according to claim 2 characterised in that said calculation means (3a, 3c, 3d, 4, 5) is adapted to calculate said positions of said black/white transitions by measuring their spacing (a1, a2, a3, a4 etc) along the detection line from a second edge of the sheet extending perpendicular to said first edge.

4. Apparatus according to claim 3 characterised in that said calculation means (3a, 3c, 3d, 4, 5) is adapted to determine the width (a21, a43 etc) of a detected mark positioned on the sheet on said detection line by subtracting the value (a1, a3) of the measured spacing for the white-to-black transition defining the edge of the mark nearest said second sheet edge from the value (a2, a4) of the measured spacing for the black-to-white transition defining the edge of the mark furthest from said second sheet edge.

5. Apparatus according to any preceding claim wherein the calculation means (3a, 3c, 3d, 4, 5) is operable to identify the sheet as an optical mark reader (OMR) sheet, an optical character reader (OCR) sheet, or a document sheet in each accordance with the identification of said information on the sheet.

6. Apparatus according to any preceding claim, wherein the calculation means is operable to identify the sheet as a sheet containing a mixture of OMR information and/or OCR information, and a document image.

7. Apparatus according to any preceding claim,

wherein the calculation means comprises a central processing unit (3a), counter means (3c), arithmetic operation means (3d), a read only memory (5), and a random access memory (4).

8. Apparatus according to any preceding claim wherein said image processing means and reading means are adapted to read and process the image information from the sheet in a manner dependent upon the output of the calculation means.

9. Apparatus according to any preceding claim, further comprising;

sheet supply means for automatically supplying each of the sheets to the reading means (1).

**Revendications**

1. Appareil servant à lire des feuilles et à distinguer entre différents types de feuilles, comprenant:

un moyen de lecture (1) pour lire une feuille portant une information d'image afin de fournir des données d'image représentant ladite information d'image;

un moyen formant mémoire (2) pour enregistrer les données d'image représentant ladite information d'image;

un moyen de codage (3b) pour coder en binaire les données d'image représentant ladite information d'image;

un moyen de calcul (3a, 3c, 3d, 4, 5) apte à traiter les données codées en binaire pour identifier la nature de l'information figurant sur la feuille et, par conséquent, le type de ladite feuille, et

un moyen de traitement d'image pour traiter l'information d'image d'une manière qui dépend du type de la feuille identifié;

caractérisé en ce que ledit moyen de calcul est apte à reconnaître la présence, dans ladite information d'image figurant sur la feuille qui a été lue, d'une configuration de marques (M) de dimensions (a) et d'espacement (L) prédéterminés, ledit moyen de calcul étant adapté pour traiter lesdites données codées en binaire de façon à détecter une succession de transitions noir/blanc distantes les unes des autres dans une direction (y; x) prédéterminée sur la feuille, pour calculer les positions desdites transitions dans ladite direction (y; x) et pour déterminer si les positions calculées sont représentatives d'une configuration de marques présentant lesdites dimensions (a) et lesdits espacements (L) prédéterminés.

2. Appareil selon la revendication 1, caractérisé en ce que ledit moyen de calcul (3a, 3c, 3d, 4, 5) est apte à détecter une dite succession de transitions noir/blanc distantes l'une de l'autre le long d'une ligne de détection qui s'étend dans ladite direction (y) parallèlement à un premier bord de ladite feuille et à une distance prédéterminée (a0) de celui-ci, afin de reconnaître la présence d'une rangée de marques (M) présentant une largeur et un espacement prédéterminés mesurés le long de ladite ligne de détection.

3. Appareil selon la revendication 2, caractérisé en ce que ledit moyen de calcul (3a, 3c, 3d, 4, 5) est adapté pour calculer lesdits emplacements desdites transitions noir/blanc en mesurant leur espacement (a1, a2, a3, a4, etc.) le long de la ligne de détection à partir d'un second bord de la feuille s'étendant perpendiculairement audit premier bord.

4. Appareil selon la revendication 3, caractérisé en ce que ledit moyen de calcul (3a, 3c, 3d, 4, 5) est adapté pour déterminer la largeur (a21, a43, etc.) d'une marque détectée placée sur la feuille sur ladite ligne de détection en soustrayant la valeur (a1, a3), représentant l'espacement mesuré relativement à la transition blanc à noir définissant le bord de la marque la plus proche dudit second bord de la feuille, de la valeur (a2, a4), représentant l'espacement mesuré relativement à la transition noir à blanc définissant le bord de la marque la plus éloignée dudit second bord de la feuille.

5. Appareil selon l'une quelconque des revendications précédentes, dans lequel le moyen de calcul (3a, 3c, 3d, 4, 5) est apte à identifier la feuille comme étant une feuille pour un lecteur optique de marques (OMR), une feuille pour un lecteur optique de caractères (OCR), ou une feuille de document, chacune conformément à l'identification de ladite information sur la feuille.

6. Appareil selon l'une quelconque des revendications précédentes, dans lequel le moyen de calcul est apte à identifier la feuille comme étant une feuille contenant un mélange d'information OMR et/ou d'information OCR, et d'une image de document.

7. Appareil selon l'une quelconque des revendications précédentes, dans lequel le moyen de calcul comprend une unité centrale de traitement (3a), un moyen formant compteur (3c), un moyen de calcul arithmétique (3d), une mémoire morte (5) et une mémoire à accès sélectif (4).

8. Appareil selon l'une quelconque des revendications précédentes, dans lequel ledit moyen de traitement d'image et ledit moyen de lecture sont adaptés pour lire et traiter l'information d'image à partir de la feuille d'une manière qui dépend de la sortie du moyen de calcul.

9. Appareil selon l'une quelconque des revendications précédentes, comprenant en outre:

un moyen d'alimentation en feuilles servant à fournir automatiquement chacune des feuilles au moyen de lecture (1).

**Patentansprüche**

1. Blattlesevorrichtung, die verschiedene Typen von Blättern unterscheidet, mit

einer Lesevorrichtung (1) zum Lesen eines Bildinformation tragenden Blatts, die der Bildinformation entsprechende Bilddaten bereitstellt;

einem Speicher (2) zur Speicherung der Bilddaten;

einem Codierer (3b) zur Binärcodierung der Bilddaten;

einer Recheneinheit (3a, 3c, 3d, 4, 5), welche die binärcodierten Daten zur Identifizierung der Art der auf dem Blatt enthaltenen Information und damit des Blatttyps verarbeitet, und

Mittel zur Bildverarbeitung, welche die Bildinformation in Abhängigkeit von dem identifizierten Blatttyp verarbeiten;

**dadurch gekennzeichnet,** daß die Recheneinheit so betreibbar ist, daß sie in der Bildinformation des gelesenen Blatts das Vorhandensein einer Reihenanordnung von Markierungen (M) bestimmter Größe (a) und bestimmten Abstands (L) erkennt, daß die Recheneinheit die binärcodierten Daten so verarbeitet, daß eine Folge von in einer bestimmten Richtung (y; x) auf dem Blatt vorhandenen Schwarz/Weiß-Übergängen erkannt, die Positionen dieser Übergänge in der genannten Richtung (y; x) berechnet und bestimmt wird, ob die errechneten Positionen einem Muster der Markierungen der vorgegebenen Größe (a) und mit dem vorgegebenen Abstand (L) entsprechen.

2. Vorrichtung nach Anspruch 1, **dadurch gekennzeichnet,** daß die Recheneinheit (3a, 3c, 3d, 4, 5) so betreibbar ist, daß die Folge von beabstandeten Schwarz/Weiß-Übergängen entlang einer Abtastlinie erkannt wird, die sich in Richtung (y) parallel zu und mit einem bestimmten Abstand (a0) von einer ersten Kante des Blatts erstreckt, um das Vorhandensein einer Reihe von Markierungen (M) mit festgelegter Breite und Abstand in Erstreckungsrichtung der Abtastlinie zu erkennen.

3. Vorrichtung nach Anspruch 2, **dadurch gekennzeichnet,** daß die Recheneinheit (3a, 3c, 3d, 4, 5) die Positionen der Schwarz/Weiß-Übergänge aus der Messung ihrer jeweiligen Abstände (a1, a2, a3, a4, usw.) entlang der Abtastlinie von einer zweiten Kante des Blatts errechnet, die senkrecht zur ersten Kante verläuft.

4. Vorrichtung nach Anspruch 3, **dadurch gekennzeichnet,** daß die Recheneinheit (3a, 3c, 3d, 4, 5) die Breite (a21, a43, usw.) einer festgestellten, auf der Abtastlinie des Blatts positionierten Marke dadurch bestimmt, daß der Wert (a1, a3) des gemessenen Abstands für den Weiß-zu-Schwarz-Übergang, der die Kante der Markierung bestimmt, welche der zweiten Blattkante am nächsten steht, von dem Wert (a2, a4) des gemessenen Abstands des Schwarzzu-Weiß-Übergangs subtrahiert, der die Kante jener Markierung definiert, die von der zweiten Blattkante am weitesten beabstandet ist.

5. Vorrichtung nach wenigstens einem der vorstehenden Ansprüche, bei welcher die Recheneinheit (3a, 3c, 3d, 4, 5) so betreibbar ist, daß sie das Blatt als Blatt für einen optischen Markierungsleser (OMR), als Blatt eines optischen Zeichenlesers (OCR) oder als ein Dokumentenblatt jeweils in Übereinstimmung mit der Identifikation der auf dem Blatt enthaltenen Information identifiziert.

6. Vorrichtung nach wenigstens einem der vorstehenden Ansprüche, bei der die Recheneinheit so betreibbar ist, daß sie das Blatt als ein Blatt identifiziert, das eine Mischung von OMR-Information und/oder OCR-Information und ein Bilddokument enthält.

7. Vorrichtung nach wenigstens einem der vorstehenden Ansprüche, bei der die Recheneinheit einen Zentralprozessor (3a), eine Zählereinheit (3c), eine arithmetische Operationseinheit (3d), einen Lesespeicher (5) und einen Speicher (4) mit wahlfreiem Zugriff umfaßt.

8. Vorrichtung nach wenigstens einem der vorstehenden Ansprüche, bei der die Bildverarbeitungseinheit und die Leseeinheit so ausgelegt sind, daß die Bildinformation des Blatts in Abhängigkeit vom Ausgang der Recheneinheit gelesen und verarbeitet wird.

9. Vorrichtung nach wenigstens einem der vorstehenden Ansprüche, mit einer Blattzuführvorrichtung zur automatischen Einzeleingabe der Blätter zur Lesevorrichtung (1).

FIG. 1

FIG.2

# FIG. 3

# FIG. 4

START

S17 —
NO ← $B-\Delta B \le L \le B+\Delta B$ ?
YES

S18 — DETERMINED TO BE THE DOCUMENT SHEET

SIMILAR OPERATION (REPEAT S10-S18)

S19 — DETERMINED TO BE THE OMR SHEET

HAVE THE MEMORY STORED ONE-PAGE DATA ? — NO — S1
YES

A POINT a0 IS SEARCHED. THE SEARCH STARTS IN THE Y DIRECTION FROM THE POINT a0 — S2

BLACK ? — NO — S3
YES

$\ell$CNT a1 → MEMORY — S4

WHITE ? — NO — S5
YES

$\ell$CNT a2 → MEMORY — S6

$a2-a1=a21$ → MEMORY — S7

S8 — $A-\Delta A \le a21 \le A+\Delta A$ ? — NO → DETERMINED TO BE THE DOCUMENT SHEET — S9
YES

BLACK ? — NO — S10
YES

$\ell$CNT a3 → MEMORY — S11

WHITE ? — NO — S12
YES

$\ell$CNT a4 → MEMORY — S13

$a4-a3=a43$ → MEMORY — S14

S16

S15 — $A-\Delta A \le a43 \le A+\Delta A$ ? — NO → DETERMIND TO BE THE DOCUMENT SHEET
YES